# FASCICULE DE BREVET EUROPEEN

(11) **EP 1 708 911 B1**
(45) Date de publication et mention de la délivrance du brevet: **29.04.2015**
(21) Numéro de dépôt: 05715205.0
(22) Date de dépôt: 24.01.2005
(51) Int. Cl.: B60S 1/40

(54) **ENSEMBLE POUR RELIER UN BRAS EN TRONCON DE PROFILE A UNE STRUCTURE ARTICULEE D'UN BALAI D'ESSUIE-GLACE**
ANORDNUNG ZUR VERBINDUNG EINES ARMS IN FORM EINES SEGMENTS EINES PROFILIERTEN ELEMENTS MIT EINER ANGELENKTEN STRUKTUR EINES WINDSCHUTZSCHEIBENWISCHERBLATTS
ASSEMBLY FOR CONNECTING AN ARM IN THE FORM OF A SEGMENT OF A PROFILED ELEMENT, TO AN ARTICULATED STRUCTURE OF A WINDSCREEN WIPER BLADE

(30) Priorité: 30.01.2004 FR 0400912
(43) Date de publication de la demande: 11.10.2006
(73) Titulaire: VALEO SYSTEMES D'ESSUYAGE, 78321 La Verrière (FR)
(72) Inventeur: THIENARD, Jean-Claude, 27140 Gisors (FR)
(86) Numéro de dépôt international: PCT/EP2005/000648
(87) Numéro de publication internationale: WO 2005/082692

(56) Documents cités:
- EP-A- 0 606 846
- EP-A- 0 895 907
- EP-A- 1 184 238
- WO-A-03/080409
- FR-A- 2 781 742
- US-A- 4 308 635
- US-A- 5 628 085

## Description

L'invention concerne un connecteur permettant de relier une extrémité d'un bras d'essuie-glace initialement prévu pour être relié à un balai du type "flat-blade", à un balai d'essuie-glace d'un autre type conventionnel comportant une structure articulée.

Selon une conception visant à réaliser des essuie-glace de faible hauteur, la structure articulée du balai d'essuie-glace qui porte la raclette ou lame d'essuyage est supprimée et ce sont par exemple les vertèbres, ou des éléments de renfort structurels analogues aux vertèbres, qui sont associées à la lame d'essuyage souple pour constituer le balai d'essuie-glace proprement dit, aussi appelé balai "flat-blade".

Le balai est monté articulé par rapport à l'extrémité d'un bras d'entraînement dont la structure de l'extrémité du bras et des moyens d'articulation permet de réduire la hauteur totale de l'essuie-glace.

Le document WO-A-03.080.409 décrit et représente un tel essuie-glace comportant un balai du type "flat-blade", et un bras d'entraînement associé.

L'extrémité libre du bras d'entraînement, qui porte le balai, a globalement la forme d'un tronçon de profilé de section transversale en U inversé ouverte vers le bas, dans laquelle est reçu un connecteur.

Le balai étant un élément qui frotte contre le pare-brise du véhicule, c'est par conséquent un élément qui est soumis à une usure et qu'il est nécessaire de remplacer par un balai neuf après une certaine période d'utilisation.

Cependant, il se peut qu'aucun balai du type "flat-blade" ne soit disponible en remplacement du balai usé, le propriétaire du véhicule devant alors monter à l'extrémité du bras un balai de type conventionnel, c'est-à-dire qui comporte une structure articulée.

Or, les balais à structure conventionnelle articulée sont conçus pour être montés à l'extrémité de bras d'essuie-glace du type en forme de crochet recourbé en U, du type en forme de tige longitudinale à section transversale rectangulaire, ou encore du type comportant un axe transversal qui s'étend transversalement depuis un bord latéral de l'extrémité du bras.

Il a ainsi été proposé des connecteurs permettant de relier une extrémité de bras, selon l'un des trois types d'extrémité mentionnés ci-dessus, à un balai à structure conventionnelle. Mais aucun connecteur ne permet de relier l'extrémité d'un bras conçu pour un essuie-glace du type "flat-blade" à un balai à structure conventionnelle.

Dans ce but, l'invention propose un ensemble, selon la revendication 1, pour relier une extrémité d'un bras d'essuie-glace à un axe transversal d'articulation appartenant à un élément de structure d'un balai d'essuie-glace.

Selon d'autres caractéristiques de l'invention :
- le dos supérieur comporte une ouverture pour le montage de la partie inférieure du connecteur entre les ailes parallèles de l'élément de structure du balai ;
- la partie inférieure du connecteur comporte des faces latérales verticales externes de guidage dont chacune est en appui contre une face longitudinale verticale interne en vis-à-vis et adjacentes de l'élément de structure ;
- les faces de guidage sont décalées longitudinalement par rapport à l'axe d'articulation ;
- les faces latérales de guidage sont des faces externes de flasques latéraux de guidage de la partie inférieure du connecteur, qui sont répartis de part et d'autre d'un plan longitudinal vertical médian du connecteur ;
- la partie inférieure du connecteur comporte au moins un logement cylindrique d'articulation d'axe transversal dans lequel ladite tige transversale d'articulation est apte à être introduite radialement ;
- la partie inférieure du connecteur comporte plusieurs logements d'articulation de diamètres internes différents, de manière que le connecteur puisse recevoir des tiges transversales d'articulation complémentaires de tailles différentes ;
- la partie inférieure du connecteur comporte une ouverture associée à chaque logement, qui s'étend verticalement vers le bas depuis le logement associé, et qui est débouchante dans un bord inférieur de la partie inférieure du connecteur ;
- les logements d'articulation sont réalisés dans des flasques latéraux d'articulation de la partie inférieure du connecteur, qui sont répartis de part et d'autre d'un plan longitudinal vertical médian du connecteur ;
- les flasques de guidage et les flasques d'articulation, qui sont situés du même coté du plan longitudinal médian du connecteur, sont des parties d'un flasque unique s'étendant verticalement vers le bas depuis la partie supérieure du connecteur ;
- l'extrémité longitudinale libre de chaque patte longitudinale forme un crochet qui est apte à s'appuyer contre un bord arrière de l'extrémité du bras pour réaliser un blocage en mouvement vers l'arrière et/ou vers le bas du connecteur par rapport à l'extrémité du bras d'essuie-glace ;
- la partie supérieure du connecteur est prolongée vers l'avant par un nez qui fait saillie verticalement vers le haut par rapport à une face supérieure horizontale de la partie supérieure du connecteur, et qui comporte une face transversale verticale arrière contre laquelle l'extrémité du bras est en butée longitudinalement vers l'avant lorsque le connecteur est en position montée dans l'extrémité du bras ;
- la face supérieure horizontale de la partie supérieure du connecteur comporte un orifice, réalisé au niveau de son bord transversal d'extrémité avant, qui est apte à recevoir un doigt de l'extrémité du bras d'essuie-glace.

D'autres caractéristiques et avantages de l'invention apparaîtront à la lecture de la description détaillée qui suit pour la compréhension de laquelle on se reportera aux figures annexées parmi lesquelles :
- la figure 1 est une représentation schématique en perspective éclatée d'un essuie-glace représentant un bras d'entraînement pour balai de type "flat-blade" qui peut être relié à un balai d'essuie-glace conventionnel par l'intermédiaire d'un connecteur conforme à l'invention ;
- la figure 2 est une vue en perspective d'un connecteur conforme à une variante de réalisation de l'invention :
- la figure 3 est une vue similaire celle de la figure 1, dans laquelle le connecteur est en position montée dans l'extrémité du bras ;
- la figure 4 est une vue similaire à celle de la figure 3, dans laquelle le connecteur, l'extrémité du bras et le balai de l'essuie-glace sont en position montée ;
- la figure 5 est une section longitudinale de l'essuie-glace représenté à la figure 6, selon la coupe 5-5 ;
- la figure 6 est une section transversale de l'essuie-glace représenté à la figure 5, selon la coupe 6-6 ;
- la figure 7 est un détail à plus grande échelle du connecteur représenté à la figure 2, représentant une variante de réalisation d'un logement d'articulation et de l'ouverture associée.

Pour la description de l'invention, on adoptera à titre non limitatif les orientations verticale, longitudinale et transversale selon le repère V, L, T indiqué aux figures.

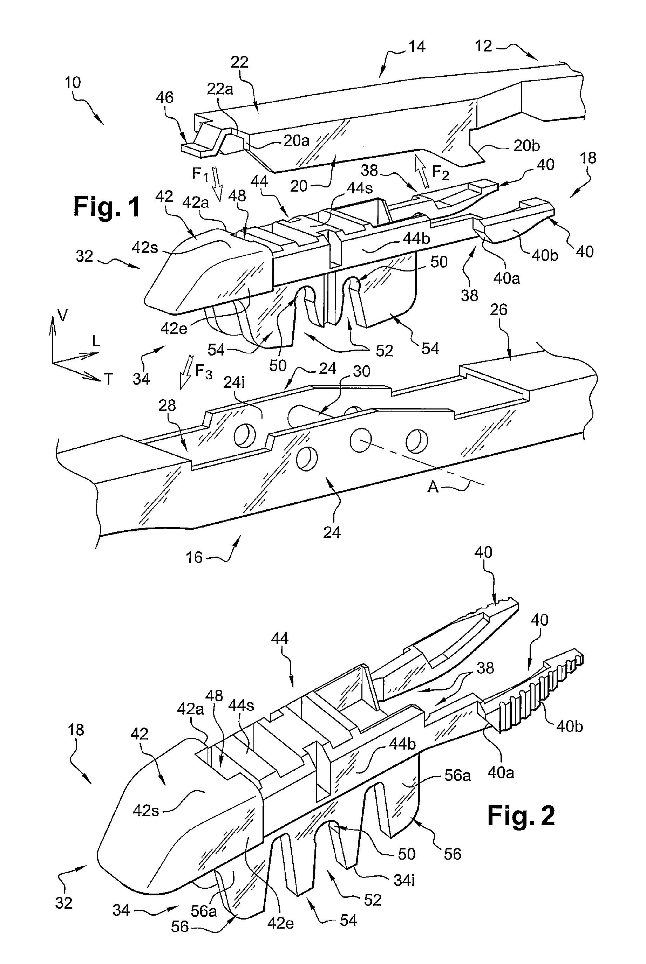

On adoptera aussi l'orientation d'avant en arrière comme étant la direction longitudinale et de gauche à droite en se reportant à la figure 1.

Dans la description qui va suivre, des éléments identiques, similaires ou analogues seront désignés par les mêmes chiffres de référence.

On a représenté aux figures un essuie-glace 10 comportant un bras d'entraînement 12, dont une première extrémité est reliée à un mécanisme d'entraînement (non représenté) et dont l'extrémité avant libre 14 est reliée à un étrier principal 16 d'un balai d'essuie-glace par l'intermédiaire d'un connecteur 18.

L'extrémité avant libre 14 du bras d'entraînement 12 consiste en un tronçon de profilé longitudinal, dont la section suivant un plan transversal vertical est en forme de U renversé, c'est-à-dire ouvert vers le bas.

L'extrémité 14 du bras 12 comporte ainsi deux joues latérales parallèles 20 d'orientation longitudinale verticale, qui sont reliées par un dos 22 horizontal.

Le balai d'essuie-glace est du type qui comporte une structure articulée permettant de plaquer la lame d'essuyage (non représentée) contre le pare-brise du véhicule (non représenté), de manière que la lame d'essuyage épouse le profil du pare-brise.

L'étrier principal 16 est un composant de la structure articulée du balai, et il comporte deux ailes longitudinales parallèles 24 reliées par un dos supérieur transversal 26.

L'étrier 16 porte à ses extrémités une série de palonniers (non représentés) qui sont reliés à des vertèbres métalliques de support de la lame d'essuyage (non représentées).

L'étrier 16 comporte dans sa partie centrale une ouverture supérieure 28 formée dans son dos supérieur 26 et dans laquelle est agencée une tige transversale 30 reliant les deux ailes 24 et formant un axe transversal A d'articulation de l'étrier 16 par rapport à l'extrémité 14 du bras 12.

Le connecteur 18 permet de relier l'extrémité 14 du bras 12 à l'étrier 16.

A cet effet, et conformément à l'invention, le connecteur 18 comporte une partie supérieure 32 qui est apte à être reliée de manière démontable à l'extrémité 14 du bras 12, et une partie inférieure 34, qui est apte à être reçue de manière démontable entre les deux ailes 24 de l'étrier 16.

La partie supérieure 32 du connecteur comporte un corps central 44 qui est de forme parallélépipédique complémentaire de l'extrémité 14 du bras 12, et des moyens pour le blocage du corps 44 en position montée dans l'extrémité 14 du bras 12.

Ces moyens de blocage comportent des pattes longitudinales de blocage 38 qui prolongent longitudinalement vers l'arrière le corps 44.

L'extrémité longitudinale arrière libre 40 de chaque patte longitudinale 38 forme un crochet transversal qui s'étend vers l'extérieur du connecteur 18, et qui est apte à s'appuyer contre un bord arrière 20b de la joue 20 associée de l'extrémité 14 du bras 12.

Ainsi, lorsque la partie supérieure 32 du connecteur 18 est en position montée dans l'extrémité 14 du bras 12, les pattes longitudinales 38 s'étendent entre les joues 20 de l'extrémité 14 du bras 12, mis à part leurs extrémités libres 40 respectives qui font saillie transversalement vers l'extérieur et en arrière des joues 20.

Selon un mode de réalisation préféré, l'extrémité arrière libre 40 de chaque patte de blocage 38 comporte une face avant 40a d'appui contre le bord arrière 20b de la joue 20 associée.

Le bord arrière 20b de la joue20 et la face avant 40a sont inclinés vers le bas, de manière que les pattes de blocage 38 réalisent simultanément le blocage en mouvement vers le bas et en mouvement vers l'avant, du connecteur 18 par rapport à l'extrémité 14 du bras 12.

La partie supérieure 32 du connecteur 18 comporte aussi un nez 42 qui prolonge le corps 44 vers l'avant.

Ce nez 42 est conformé de manière qu'il fait saillie verticalement vers le haut par rapport à une face supérieure 44s du corps 44, et de manière qu'il fait saillie transversalement par rapport aux faces latérales longitudinales verticales 44b du corps 44.

Le nez 42 comporte ainsi une face transversale verticale arrière 42a qui est en appui contre les bords transversaux ou verticaux avant 22a, 20a respectifs du dos 22 ou des joues 20 de l'extrémité 14 du bras 12, lorsque le connecteur 18 est en position montée dans l'extrémité 14 du bras 12.

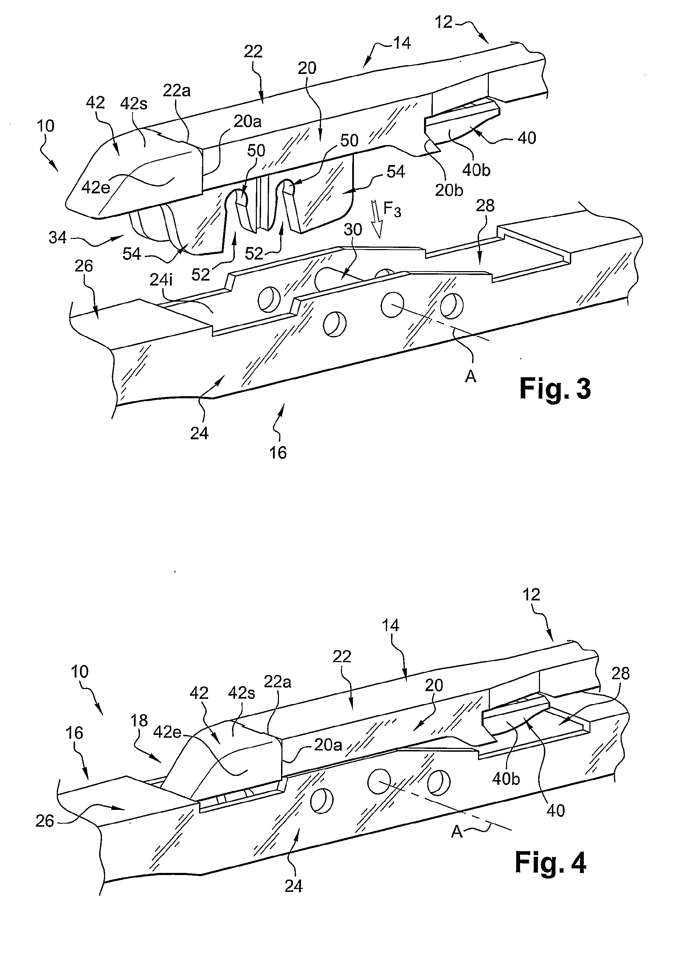

Comme on peut le voir à la figure 3, le nez 42 est conformé de manière que ses faces supérieure 42s et latérales 42e externes affleurent avec les joues 20 et le dos 22 de l'extrémité 14 du bras 12, lorsque le connecteur 18 est en position montée dans l'extrémité 14 du bras 12.

Le nez 42 s'étend ainsi dans le prolongement de l'extrémité 14 du bras 12, permettant d'avoir de meilleures propriétés aérodynamiques, ainsi qu'un aspect agréable de l'essuie-glace 10.

Le blocage en mouvement vertical de l'extrémité avant de la partie supérieure 32 par rapport à l'extrémité 14 du bras 12 est réalisé par un doigt 46 porté par l'extrémité 14 du bras 12, qui s'étend vers le bas et vers l'avant depuis le bord avant 22a du dos 22.

La face supérieure 44s du corps 44 comporte un orifice 48, réalisé au niveau de son extrémité avant, dans lequel le doigt 46 est reçu lorsque le connecteur 18 est en position montée dans l'extrémité 14 du bras 12, de manière que le doigt 46 est en appui vers le haut contre une face inférieure 42i du nez 42.

Le montage du connecteur 18 dans l'extrémité 14 du bras 12 s'effectue, dans un premier mouvement, en introduisant le doigt 46 dans l'orifice 48 du corps 44, comme on l'a représenté à la figure 1 par la flèche F1.

Ensuite, dans un deuxième mouvement, le corps 44 est introduit entre les joues 20 de l'extrémité 14 du bras 12.

Pour que les extrémités 40 des pattes 38 ne n'opposent pas à ce deuxième mouvement, l'utilisateur qui réalise ce montage appuie sur les face latérales externes 40b des extrémités 40 de manière à provoquer une déformation élastique des pattes 38 qui s'effacent alors entre les joues 20.

Enfin, lorsque le connecteur 18 est en position montée dans l'extrémité 14 du bras 12, l'utilisateur relâche son effort sur les extrémités 40, pour que les pattes 38 reviennent élastiquement dans leur position initiale dans laquelle les faces avant 40a de leurs extrémités sont en appui contre le bord arrière 20b des joues 20, comme on l'a représenté à la figure 3.

Comme on l'a dit plus haut, la partie inférieure 34 du connecteur est apte à être reçue entre les deux ailes 24 de l'étrier 16, au travers de l'ouverture 28 du dos supérieur 26 de l'étrier 16.

La partie inférieure 34 réalise aussi l'articulation du connecteur 18 par rapport au balai d'essuie-glace autour de l'axe transversal A. A cet effet, la partie inférieure 34 comporte un logement cylindrique transversal 50 d'articulation qui est apte à recevoir la tige transversale 30.

La partie inférieure 34 comporte en outre une ouverture 52 qui s'étend verticalement vers le bas depuis le logement d'articulation 50, et qui est débouchante dans le bord inférieur 34i de la partie inférieure 34.

Cette ouverture 52 permet d'introduire radialement la tige transversale 30 dans le logement d'articulation 50, lors du montage de la partie inférieure 34 entre les ailes 24 de l'étrier 16.

De plus, l'ouverture 52 et le logement d'articulation 50 réalisent le maintien de la partie inférieure 34 en position autour de la tige 30 d'articulation.

Pour cela, les dimensions de l'ouverture 52 sont déterminées de manière à former un rétrécissement au niveau de la liaison entre l'ouverture 52 et le logement d'articulation 50.

Selon un mode de réalisation préféré du connecteur 18, permettant de réduire la quantité de matière nécessaire à sa fabrication, la partie inférieure est un élément globalement creux.

Le logement d'articulation 50 est alors réalisé dans des flasques longitudinaux verticaux 54 d'articulation qui sont répartis transversalement de part et d'autre d'un plan longitudinal vertical médian du connecteur 18.

Il existe une grande diversité de tailles de balais d'essuie-glace du type à structure articulée. Cela implique par conséquent que les dimensions de certains éléments du balai sont variables selon les tailles.

C'est notamment le cas en ce qui concerne le diamètre des tiges transversales 30.

Pour pouvoir être monté dans différentes tailles de balais, et selon une variante de réalisation de l'invention représentée aux figures 1 et 3, la partie inférieure 34 du connecteur 18 comporte plusieurs logements d'articulation 50, de diamètres internes différents, chacun associé à une taille de tige transversale 30.

Les flasques d'articulation 54 comportent a cet effet plusieurs ouvertures 52, chacune associée à un logement d'articulation 50.

Lorsque la partie inférieure 34 est en position montée entre les ailes 24 de l'étier 16, elle est aussi montée articulée par rapport à l'étrier 16 autour de l'axe A.

On a représenté à la figure 2 un connecteur 18 conforme à une variante de réalisation de l'invention, selon laquelle la partie inférieure 34 comporte des flasques 56 qui contribuent au guidage en pivotement de la partie inférieure 34 par rapport à l'étrier 16.

Ces flasques de guidage 56 comportent chacun une face latérale verticale externe 56a de guidage qui est en appui contre la face longitudinale interne 24i en vis-à-vis d'une aile 24 de l'étrier 16.

Selon un mode de réalisation préféré de l'invention, les faces de guidage 56a sont décalées longitudinalement par rapport à l'axe A, à une distance de l'axe A la plus élevée possible, compte tenu des caractéristiques dimensionnelles générales des étriers 16, ce qui permet d'avoir un guidage le plus efficace possible.

Selon la variante de réalisation de l'invention représentée à la figure 2, les flasques de guidage 56 et les flasques d'articulation 54 qui portent les logements d'articulation 50 sont des flasques distincts de la partie inférieure 34 du connecteur 18.

Cependant, il sera compris que les flasques de guidage 56 qui sont agencés d'un même coté du plan vertical médian du connecteur et les flasques d'articulation 54 agencés du même coté du plan vertical médian, peuvent être des parties d'un flasque unique, qui s'étend verticalement vers le bas depuis le corps 44 de la partie supérieure 32 du connecteur 18.

Le montage de la partie inférieure 34 du connecteur 18 dans l'ouverture 28 de l'étrier 16 s'effectue par un mouvement globalement vertical vers le bas du connecteur 18 par rapport à l'étrier 16, comme on l'a représenté par la flèche F3 à la figure 3, en introduisant la tige 30 dans l'ouverture 52, puis en exerçant un effort vertical vers le bas sur le connecteur, de manière à introduire la tige 30 dans le logement d'articulation 50.

Les faces de guidage 56a sont alors les faces externes de ce flasque unique, que l'on désignera par la référence 54 des flasques d'articulation.

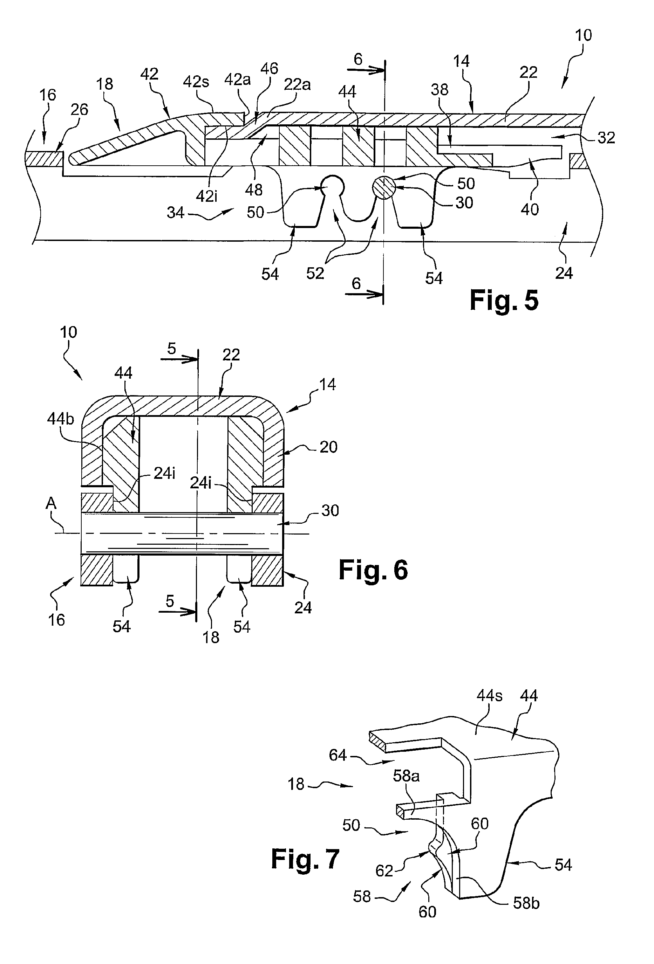

Comme on peut le voir aux figures 4 et 6, lorsque le connecteur 18 relie l'extrémité 14 du bras 12 à l'étrier 16, la partie supérieure 32 du connecteur 18 s'étend au dessus des ailes 24 de l'étrier 16.

Il en est de même pour l'extrémité 14 du bras 12 pour laquelle les bords inférieurs des joues 20 s'étendent verticalement au dessus des ailes 24 de l'étrier 16.

Cela permet au connecteur 18 et à l'extrémité 14 du bras 12 de pivoter par rapport à l'étrier 16, autour de l'axe transversal A, sans que les ailes 24 n'entravent leur mouvement.

Le connecteur 18 conforme à l'invention est réalisé d'une pièce par moulage de matière plastique, et on utilise à cet effet, selon un mode opératoire connu, un moule supérieur et un moule inférieur complémentaires.

Or, certaines formes du connecteur 18, et plus particulièrement le rétrécissement formé à la liaison entre les logements d'articulation 50 et les ouvertures 52 associés, nécessitent que le connecteur 18 comportent des dégagements vers le haut et vers le bas, ce qui n'est pas possible du fait de la présence du fond supérieur du logement d'articulation 50.

Pour permettre la réalisation de ces rétrécissements, et selon une variante de réalisation du connecteur représentée à la figure 7, le logement d'articulation 50 est délimité dans sa partie supérieure par une ouverture 58, globalement en forme de U retourné, qui est réalisé dans le flasque de la partie inférieure du connecteur.

Le fond bombé 58a de l'ouverture 58 forme un demi-cercle et délimite la partie supérieure du logement d'articulation 50. Les bords 58b de l'ouverture 58 sont rectilignes, de manière qu'ils ne permettent pas de réaliser le blocage de la tige 30 dans le logement d'articulation 50.

L'ouverture 58 s'étend vers le haut depuis le bord inférieur du flasque d'articulation 54 associé, et elle forme aussi l'ouverture 52 d'introduction de la tige 30 dans le logement d'articulation 50.

Pour délimiter la partie inférieure du logement d'articulation 50, et ainsi pour réaliser les moyens de blocage vertical de la tige 30 en position dans le logement d'articulation 50, le flasque d'articulation 54 porte sur sa face interne une surépaisseur 60 associée à chaque bord 58b de l'ouverture 58.

La surépaisseur 60 comporte un ergot 62 qui fait saillie longitudinalement vers l'intérieur de l'ouverture 58 par rapport au bord 58b de l'ouverture 58.

L'association de deux ergots 62 en vis-à-vis l'un de l'autre permet de former le rétrécissement nécessaire au blocage vertical de la tige 30 en position montée dans le logement d'articulation 50, et ainsi, ces ergots 62 délimitent la partie inférieure du logement d'articulation 50.

La partie supérieure 32 du connecteur 18 comporte en outre une ouverture 64 permettant le passage d'un élément de moulage (non représenté) des ergots 62.

Lorsque le connecteur 18 est en position montée avec l'extrémité avant 14 du bras 12 et avec l'étrier 16 du balai, le connecteur 18 permet d'avoir une liaison articulée de l'extrémité avant 14 du bras 12 par rapport à l'étrier 16 du balai.

Cependant, lorsque le balai est à son tour usé, il est nécessaire de le changer. A cet effet, et selon un autre avantage de l'invention, le connecteur 18 est monté avec l'extrémité avant 14 du bras 12 et avec l'étrier 16 du balai de manière démontable.

Cela permet à l'utilisateur de conserver le connecteur 18 lorsque le balai de remplacement est de nouveau un balai à structure articulée, ou bien de ne plus conserver le connecteur 18, lorsque le balai de remplacement est un balai du type "flat-blade".

Le démontage du connecteur d'avec l'extrémité avant 14 du bras 12 ou d'avec l'étrier 16 du balai, s'effectue de manière inverse par rapport au montage.

Ainsi, le démontage du connecteur 18 d'avec l'étrier 16 s'effectue en exerçant sur le connecteur et sur l'étrier 16 deux efforts antagonistes.

Le démontage du connecteur 18 d'avec l'extrémité 14 du bras 12 s'effectue d'abord en agissant sur les pattes longitudinales 38, de manière à rapprocher leurs extrémités 40, en dégageant le corps 44 de l'extrémité 14 du bras 12, et enfin, en retirant le doigt 46 hors de l'orifice 48 du corps 44.

## Revendications

1. Ensemble pour relier un bras (12) d'essuie-glace à un axe transversal (30) d'articulation appartenant à un élément de structure (16) d'un balai d'essuie-glace (10), cet élément de structure (16) étant constitué de deux ailes parallèles reliées par un dos supérieur (26), une tige transversale s'étendant entre les faces internes (24i) des deux ailes (24) pour constituer l'axe transversal (30) d'articulation, l'ensemble comprenant :
- une extrémité (14) du bras (12) d'essuie-glace (10) globalement en forme de tronçon de profilé longitudinal ayant une section transversale en U ouverte vers le bas, et
- un connecteur (18) constitué :
- d'une partie supérieure (32) qui est apte à être reliée de manière démontable dans l'extrémité (14) du bras d'essuie-glace (12), la partie supérieure (32) du connecteur (18) est de forme complémentaire de celle de l'extrémité (14) du bras (12), et la partie supérieure (32) du connecteur (18) comporte des moyens (38, 40) de blocage du connecteur (18) en position montée dans l'extrémité (14) du bras (12), le connecteur (18) comporte des pattes longitudinales (38) de blocage du connecteur (18) en position montée à l'intérieur de l'extrémité avant (14) du bras (12) qui s'étendent longitudinalement vers l'arrière depuis l'extrémité longitudinale arrière de la partie supérieure (32) du connecteur (18), et
- d'une partie inférieure (34) qui est apte à être reçue de manière démontable entre les deux ailes parallèles (24) de l'élément de structure (16),
**caractérisé en ce que** lorsque le connecteur (18) relie l'extrémité (14) du bras (12) à l'élément de structure (16), la partie supérieure (32) du connecteur (18) s'étend au dessus des ailes (24) de l'élément de structure (16) de sorte que le connecteur (18) et l'extrémité (14) du bras (12) peuvent pivoter par rapport à l'élément de structure (16), autour de l'axe transversal (A), sans que les ailes (24) n'entravent leur mouvement.

2. Ensemble selon la revendication précédente, **caractérisé en ce que** la partie inférieure (34) du connecteur (18) est apte à être montée entre les ailes (24) parallèles de l'élément de structure (16) du balai, au travers d'une ouverture (28) du dos supérieur (26).

3. Ensemble selon l'une quelconque des revendications précédentes, **caractérisé en ce que** la partie inférieure (34) du connecteur (18) comporte des faces latérales (56a) verticales externes de guidage dont chacune est en appui contre une face longitudinale verticale interne (24i) en vis-à-vis et adjacentes de l'aile (24) de l'élément de structure (16).

4. Ensemble selon la revendication précédente, **caractérisé en ce que** les faces de guidage (56a) sont décalées longitudinalement par rapport à l'axe (A) d'articulation.

5. Ensemble selon l'une des revendications 3 ou 4, **caractérisé en ce que** les faces latérales de guidage (56a) sont des faces externes de flasques latéraux (56) de guidage de la partie inférieure (34) du connecteur (18), qui sont répartis de part et d'autre d'un plan longitudinal vertical médian du connecteur (18).

6. Ensemble selon l'une quelconque des revendications précédentes, **caractérisé en ce que** la partie inférieure (34) du connecteur (18) comporte au moins un logement cylindrique d'articulation (50) d'axe transversal dans lequel ladite tige transversale (30) d'articulation est apte à être introduite radialement.

7. Ensemble selon la revendication précédente, **caractérisé en ce que** la partie inférieure (34) du connecteur (18) comporte plusieurs logements d'articulation (50) de diamètres internes différents, de manière que le connecteur (18) puisse recevoir des tiges transversales d'articulation (30) complémentaires de tailles différentes.

8. Ensemble selon l'une des revendications 6 ou 7, **caractérisé en ce que** la partie inférieure (34) du connecteur (18) comporte une ouverture (52) associée à chaque logement (50), qui s'étend verticalement vers le bas depuis le logement (50) associé, et qui débouche dans un bord inférieur (34i) de la partie inférieure (34) du connecteur (18).

9. Ensemble selon l'une des revendications 6 à 8, **caractérisé en ce que** les logements d'articulation (50) sont réalisés dans des flasques latéraux d'articulation (54) de la partie inférieure (34) du connecteur (18), qui sont répartis de part et d'autre d'un plan longitudinal vertical médian du connecteur (18).

10. Ensemble selon la revendication 9, en combinaison avec la revendication 4, **caractérisé en ce que** les flasques de guidage (56) et les flasques d'articulation (54), qui sont situés du même coté du plan longitudinal médian du connecteur (18), sont des parties d'un flasque unique (54) s'étendant verticalement vers le bas depuis la partie supérieure (32) du connecteur (18).

11. Ensemble selon l'une des revendications précédentes, **caractérisé en ce que** l'extrémité longitudinale libre (40) de chaque patte longitudinale (38) forme un crochet qui est apte à s'appuyer contre un bord arrière (20b) de l'extrémité (14) du bras (12) pour réaliser un blocage en mouvement vers l'arrière et/ou vers le bas du connecteur (18) par rapport à l'extrémité (14) du bras (12) d'essuie-glace.

12. Ensemble selon la revendication précédente, **caractérisé en ce que** la partie supérieure (32) du connecteur (18) est prolongée vers l'avant par un nez (42) qui fait saillie verticalement vers le haut par rapport à une face supérieure horizontale (44s) de la partie supérieure (32) du connecteur (18), et qui comporte une face transversale verticale arrière (42a) contre laquelle l'extrémité (14) du bras (12) est en butée longitudinalement vers l'avant lorsque le connecteur (18) est en position montée dans l'extrémité (14) du bras (12).

13. Ensemble selon la revendication précédente, **caractérisé en ce que** la face supérieure horizontale (44s) de la partie supérieure (32) du connecteur (18) comporte un orifice (48), réalisé au niveau extrémité avant, qui est apte à recevoir un doigt (46) de l'extrémité (14) du bras (12) d'essuie-glace.

14. Essuie-glace comportant un balai d'essuie-glace ainsi qu'un ensemble selon l'une quelconque des revendications précédentes.

## Patentansprüche

1. Anordnung zum Verbinden eines Arms (12) eines Scheibenwischers mit einer zu einem Strukturelement (16) eines Scheibenwischerblatts (10) gehörenden, quer angeordneten Gelenkachse (30), wobei dieses Strukturelement (16) aus zwei durch einen oberen Rücken (26) verbundenen, parallelen Schenkeln besteht, wobei sich ein Querstift zwischen den Innenflächen (24i) der zwei Schenkel (24) erstreckt, um die quer angeordnete Gelenkachse (30) zu bilden, wobei die Anordnung aufweist:
- ein Ende (14) des Arms (12) des Scheibenwischers (10), das im Wesentlichen die Form eines Segments eines sich längs erstreckenden profilierten Elements mit einem nach unten offenen U-förmigen Querschnitt aufweist, und
- einen Verbinder (18), bestehend aus:
- einem oberen Teil (32), welcher geeignet ist, auf lösbare Weise in dem Ende (14) des Scheibenwischerarms (12) verbunden zu werden, wobei der obere Teil (32) des Verbinders (18) eine Form aufweist, die zu derjenigen des Endes (14) des Arms (12) komplementär ist, und der obere Teil (32) des Verbinders (18) Mittel (38, 40) zur Verriegelung des Verbinders (18) in einer in dem Ende (14) des Arms (12) angebrachten Position aufweist, wobei der Verbinder (18) Längslaschen (38) zur Verriegelung des Verbinders (18) in einer im Inneren des vorderen Endes (14) des Arms (12) angebrachten Position aufweist, welche sich von dem hinteren Längsende des oberen Teils (32) des Verbinders (18) aus in Längsrichtung nach hinten erstrecken, und
- einem unteren Teil (34), welcher geeignet ist, auf lösbare Weise zwischen den zwei parallelen Schenkeln (24) des Strukturelements (16) aufgenommen zu werden,
**dadurch gekennzeichnet, dass,** wenn der Verbinder (18) das Ende (14) des Arms (12) mit dem Strukturelement (16) verbindet, der obere Teil (32) des Verbinders (18) sich über den Schenkeln (24) des Strukturelements (16) erstreckt, derart, dass der Verbinder (18) und das Ende (14) des Arms (12) bezüglich des Strukturelements (16) um die Querachse (A) schwenken können, ohne dass die Schenkel (24) ihre Bewegung behindern.

2. Anordnung nach dem vorhergehenden Anspruch, **dadurch gekennzeichnet, dass** der untere Teil (34) des Verbinders (18) geeignet ist, durch eine Öffnung (28) des oberen Rückens (26) hindurch zwischen den parallelen Schenkeln (24) des Strukturelements (16) des Wischerblatts angebracht zu werden.

3. Anordnung nach einem der vorhergehenden Ansprüche, **dadurch gekennzeichnet, dass** der untere Teil (34) des Verbinders (18) äußere vertikale seitliche Führungsflächen (56a) aufweist, von denen jede an einer gegenüber befindlichen und benachbarten, sich längs erstreckenden vertikalen Innenfläche (24i) des Schenkels (24) des Strukturelements (16) zur Anlage kommt.

4. Anordnung nach dem vorhergehenden Anspruch, **dadurch gekennzeichnet, dass** die Führungsflächen (56a) bezüglich der Gelenkachse (A) in Längsrichtung verschoben sind.

5. Anordnung nach einem der Ansprüche 3 oder 4, **dadurch gekennzeichnet, dass** die seitlichen Führungsflächen (56a) Außenflächen von seitlichen Führungsflanschen (56) des unteren Teils (34) des Verbinders (18) sind, welche beiderseits einer vertikalen Mittellängsebene des Verbinders (18) verteilt sind.

6. Anordnung nach einem der vorhergehenden Ansprüche, **dadurch gekennzeichnet, dass** der untere Teil (34) des Verbinders (18) mindestens eine zylindrische Aufnahme (50) für ein quer angeordnetes Gelenk aufweist, in welche der quer angeordnete Gelenkstift (30) in radialer Richtung eingeführt werden kann.

7. Anordnung nach dem vorhergehenden Anspruch, **dadurch gekennzeichnet, dass** der untere Teil (34) des Verbinders (18) mehrere Gelenkaufnahmen (50) mit unterschiedlichen Innendurchmessern aufweist, derart, dass der Verbinder (18) komplementäre quer angeordnete Gelenkstifte (30) mit unterschiedlichen Größen aufnehmen kann.

8. Anordnung nach einem der Ansprüche 6 oder 7, **dadurch gekennzeichnet, dass** der untere Teil (34) des Verbinders (18) für jede Aufnahme (50) eine zugeordnete Öffnung (52) aufweist, welche sich von der zugeordneten Aufnahme (50) aus vertikal nach unten erstreckt und welche in einen unteren Rand (34i) des unteren Teils (34) des Verbinders (18) mündet.

9. Anordnung nach einem der Ansprüche 6 bis 8, **dadurch gekennzeichnet, dass** die Gelenkaufnahmen (50) in seitlichen Gelenkflanschen (54) des unteren Teils (34) des Verbinders (18) ausgebildet sind, welche beiderseits einer vertikalen Mittellängsebene des Verbinders (18) verteilt sind.

10. Anordnung nach Anspruch 9, in Kombination mit Anspruch 4, **dadurch gekennzeichnet, dass** die Führungsflansche (56) und die Gelenkflansche (54), welche sich auf ein und derselben Seite der Mittellängsebene des Verbinders (18) befinden, Teile eines einzigen Flansches (54) sind, der sich von dem oberen Teil (32) des Verbinders (18) aus vertikal nach unten erstreckt.

11. Anordnung nach einem der vorhergehenden Ansprüche, **dadurch gekennzeichnet, dass** das freie Längsende (40) jeder Längslasche (38) einen Haken bildet, welcher geeignet ist, sich an einem hinteren Rand (20b) des Endes (14) des Arms (12) abzustützen, um eine Blockierung der Bewegung des Verbinders (18) bezüglich des Endes (14) des Scheibenwischerarms (12) nach hinten und/oder nach unten zu bewirken.

12. Anordnung nach dem vorhergehenden Anspruch, **dadurch gekennzeichnet, dass** der obere Teil (32) des Verbinders (18) durch eine Nase (42) nach vorn verlängert ist, welche bezüglich einer horizontalen oberen Fläche (44s) des oberen Teils (32) des Verbinders (18) vertikal nach oben vorsteht und welche eine vertikale hintere Querfläche (42a) aufweist, an welcher das Ende (14) des Arms (12) in Längsrichtung nach vorn anliegt, wenn sich der Verbinder (18) in einer in dem Ende (14) des Arms (12) angebrachten Position befindet.

13. Anordnung nach dem vorhergehenden Anspruch, **dadurch gekennzeichnet, dass** die horizontale obere Fläche (44s) des oberen Teils (32) des Verbinders (18) eine am vorderen Ende ausgebildete Öffnung (48) aufweist, welche geeignet ist, einen Finger (46) des Endes (14) des Scheibenwischerarms (12) aufzunehmen.

14. Scheibenwischer, welcher ein Scheibenwischerblatt sowie eine Anordnung nach einem der vorhergehenden Ansprüche aufweist.

## Claims

1. Assembly for connecting a windscreen wiper arm (12) to a transverse articulation spindle (30) belonging to a structural element (16) of a windscreen wiper head (10), this structural element (16) consisting of two parallel wings connected by a top web (26), a transverse rod extending between the internal faces (24i) of the two wings (24) so as to constitute the transverse articulation spindle (30), the assembly comprising:
- an end (14) of the arm (12) of the windscreen wiper (10) in the overall shape of a segment of longitudinal profile having a U-shaped cross section which opens downwards, and
- a connector (18) consisting:
- of an upper part (32) which can be connected in a removable manner in the end (14) of the windscreen wiper arm (12), the shape of the upper part (32) of the connector (18) matching that of the end (14) of the arm (12), and the upper part (32) of the connector (18) comprises means (38, 40) for locking the connector (18) in the mounted position in the end (14) of the arm (12), the connector (18) comprising longitudinal legs (38) for locking the connector (18) in the mounted position within the front end (14) of the arm (12), which legs extend rearwards in the longitudinal direction from the rear longitudinal end of the upper part (32) of the connector (18), and
- of a lower part (34) which can be received in a removable manner between the two parallel wings (24) of the structural element (16),
**characterized in that,** when the connector (18) connects the end (14) of the arm (12) to the structural element (16), the upper part (32) of the connector (18) extends above the wings (24) of the structural element (16) such that the connector (18) and the end (14) of the arm (12) are able to pivot with respect to the structural element (16), about the transverse axis (A), without the wings (24) hampering their movement.

2. Assembly according to the preceding claim, **characterized in that** the lower part (34) of the connector (18) can be mounted between the parallel wings (24) of the structural element (16) of the head, through an opening (28) of the top web (26).

3. Assembly according to either one of the preceding claims, **characterized in that** the lower part (34) of the connector (18) comprises external vertical lateral guiding faces (56a), each of which presses against an internal vertical longitudinal face (24i), facing and adjacent to the wing (24) of the structural element (16).

4. Assembly according to the preceding claim, **characterized in that** the guiding faces (56a) are offset in the longitudinal direction with respect to the articulation axis (A).

5. Assembly according to either of Claims 3 and 4, **characterized in that** the lateral guiding faces (56a) are external faces of lateral guiding flanges (56) of the lower part (34) of the connector (18), which are positioned on either side of a longitudinal vertical median plane of the connector (18).

6. Assembly according to any one of the preceding claims, **characterized in that** the lower part (34) of the connector (18) comprises at least one cylindrical articulation recess (50) which has a transverse axis and into which said transverse articulation rod (30) can be introduced radially.

7. Assembly according to the preceding claim, **characterized in that** the lower part (34) of the connector (18) comprises multiple articulation recesses (50) which have different internal diameters, such that the connector (18) can receive matching transverse articulation rods (30) of different sizes.

8. Assembly according to either of Claims 6 and 7, **characterized in that** the lower part (34) of the connector (18) comprises an opening (52) which is associated with each recess (50) and which extends vertically downwards from the associated recess (50), and which opens into a lower edge (34i) of the lower part (34) of the connector (18).

9. Assembly according to one of Claims 6 to 8, **characterized in that** the articulation recesses (50) are created in lateral articulation flanges (54) of the lower part (34) of the connector (18), which are positioned on either side of a longitudinal vertical median plane of the connector (18).

10. Assembly according to Claim 9, in combination with Claim 4, **characterized in that** the guiding flanges (56) and the articulation flanges (54), which are located on the same side of the longitudinal median plane of the connector (18), are parts of a single flange (54) extending vertically downwards from the upper part (32) of the connector (18).

11. Assembly according to one of the preceding claims, **characterized in that** the free longitudinal end (40) of each longitudinal leg (38) forms a hook which can press against a rear edge (20b) of the end (14) of the arm (12) in order to prevent the connector (18) moving towards the rear and/or towards the bottom with respect to the end (14) of the windscreen wiper arm (12) .

12. Assembly according to the preceding claim, **characterized in that** the upper part (32) of the connector (18) is extended towards the front by a nose (42) which projects vertically upwards with respect to an upper horizontal face (44s) of the upper part (32) of the connector (18), and which comprises a rear vertical transverse face (42a) against which the end (14) of the arm (12) abuts longitudinally towards the front when the connector (18) is in the mounted position in the end (14) of the arm (12).

13. Assembly according to the preceding claim, **characterized in that** the upper horizontal face (44s) of the upper part (32) of the connector (18) comprises an orifice (48), created at the front end, which is able to receive a tab (46) of the end (14) of the windscreen wiper arm (12).

14. Windscreen wiper comprising a windscreen wiper head and an assembly according to any one of the preceding claims.
